# EUROPEAN PATENT APPLICATION

(11) **EP 4 572 400 A1**
(43) Date of publication of application: **18.06.2025**
(21) Application number: 23851657.9
(22) Date of filing: 02.08.2023
(51) Int. Cl.: H04W 36/00

(54) **INFORMATION PROCESSING METHOD AND APPARATUS, AND READABLE STORAGE MEDIUM**

(30) Priority: 10.08.2022 CN 202210954153
(71) Applicant: Datang Mobile Communications Equipment Co., Ltd., Beijing 100085 (CN)
(72) Inventor: YAN, Xue, Beijing 100085 (CN); YAN, Nan, Beijing 100085 (CN)
(74) Representative: dompatent von Kreisler Selting Werner - Partnerschaft von Patent- und Rechtsanwälten mbB
(86) International application number: PCT/CN2023/110708
(87) International publication number: WO 2024/032436

(57) **Abstract**

An information processing method and apparatus and a readable storage medium are provided, and relate to the technical field of communications, so as to optimize the CHO and/or CPAC configuration parameters, reduce the CHO and/or CPAC failures, and improve the mobile robustness. The method includes: receiving, by a terminal, CHO configuration information sent by a network device, where the CHO configuration information includes SCG configuration information; and if a failure occurs, recording and reporting first information by the terminal to the network device, where the first information includes information related to the CHO configuration information.

## Description

### CROSS REFERENCE OF RELATED APPLICATION

The present disclosure claims the priority of Chinese patent application No. 202210954153.4, titled as "information processing method and apparatus, and readable storage medium", and filed on August 10, 2022 to China National Intellectual Property Administration, which is incorporated herein by reference in its entirety.

### TECHNICAL FIELD

The present disclosure relates to the technical field of communications, and in particular, to an information processing method and apparatus, and a readable storage medium.

### BACKGROUND

In order to reduce the handover interruption time and improve the handover reliability, a mechanism of Conditional Handover (CHO) is introduced. In the CHO mechanism, a network device configures a candidate handover target cell and executes a judgment condition for a terminal in advance according to a measurement report reported by the terminal. When a measurement result of the terminal meets the judgment condition of the conditional handover, the terminal initiates a handover using reserved target cell resources according to the configuration of the network device, thereby improving a handover success rate.

In the related art, the parameter reporting and optimization for CHO-related failures are all aimed at a CHO configuration. With the development of technologies, it may be supported to configure a Secondary Cell Group (SCG) configuration in the CHO configuration. Therefore, in the scenarios where the SCG configuration is configured in the CHO configuration, it is necessary to provide an optimization solution for handover failures.

### SUMMARY

The embodiments of the present disclosure provide an information processing method and apparatus, and a readable storage medium, so as to solve the above technical problems.

In a first aspect, an embodiment of the present disclosure provides an information processing method, including:
receiving, by a terminal, Conditional Handover (CHO) configuration information sent by a network device, where the CHO configuration information includes Secondary Cell Group (SCG) configuration information; and
if a failure occurs, recording and reporting first information by the terminal to the network device, where the first information includes information related to the CHO configuration information.

Optionally, the SCG configuration information includes one or more of:
a Primary Serving Cell (PSCell) of a candidate secondary cell group and a synchronous reconfiguration command corresponding to the PSCell;
first Conditional PSCell Addition/Change (CPAC) configuration information, where the first CPAC configuration information includes one or more candidate PSCells; trigger conditions and synchronous reconfiguration commands corresponding to the candidate PSCells; or
second CPAC configuration information, where the second CPAC configuration information includes a plurality of candidate PSCells and synchronous reconfiguration commands corresponding to the candidate PSCells.

Optionally, the first information includes one or more of:
PSCell-related information;
time information;
information related to the first CPAC configuration information and/or the second CPAC configuration information; or
second information;
where the first CPAC configuration information includes: one or more candidate PSCells and trigger conditions and synchronous reconfiguration commands corresponding to the candidate PSCells; and the second CPAC configuration information includes a plurality of candidate PSCells and synchronous reconfiguration commands corresponding to the candidate PSCells.

Optionally, the PSCell-related information includes one or more of:
identification information of a target PSCell;
Random Access Channel (RACH) information of the target PSCell;
a measurement result of the target PSCell; or
identification information of a source PSCell.

Optionally, the time information includes:
a time interval between a first event and a second event; where,
the first event includes one or more of: a reception of the CHO configuration information, a reception of the CPAC configuration information, an execution of a CHO, an execution of a PSCell addition, an execution of a PSCell change, an execution of a CPAC, a failure of the execution of the PSCell addition, a failure of the execution of the PSCell change, a failure of the execution of the CPAC, meeting of a CHO trigger condition, or meeting of a CPAC trigger condition; and
the second event includes one or more of: a failure of the execution the PSCell addition, a failure of the execution the PSCell change, a failure of the execution the CPAC, an execution of a PSCell addition, an execution of a PSCell change, an execution of a CPAC, reporting of the failure of the execution the PSCell addition or the PSCell change or the CPAC, a Radio Link Failure (RLF) of the terminal in the target PSCell, meeting of the CHO trigger condition, or meeting of the CPAC trigger condition.

Optionally, the time interval between the first event and the second event includes one or more of:
a time interval from the reception of the CHO configuration information or the CPAC configuration information to the failure of the PSCell addition or the PSCell change or the CPAC;
a time interval from the execution of the CHO or the PSCell addition or the PSCell change or the CPAC to the failure of the PSCell addition or the PSCell change or the CPAC;
a time interval from the reception of the CHO configuration information or the CPAC configuration information to the execution of the PSCell addition or the PSCell change or the CPAC;
a time interval from the failure of the PSCell addition or the PSCell change or the CPAC to the reporting of the failure;
a time interval from the reception of the CHO configuration information or the CPAC configuration information to the RLF of the terminal in the target PSCell;
a time interval from the execution of the CHO or the CPAC to the RLF of the terminal in the target PSCell;
a time interval from a time when the CHO trigger condition is met to a time when the CPAC trigger condition is met; or
a time interval from a time when the CPAC trigger condition is met to a time when the CHO trigger condition is met.

Optionally, the information related to the first CPAC configuration information and/or the second CPAC configuration information includes one or more of:
identification information of a candidate target PSCell;
latest measurement result information of the candidate target PSCell;
CPAC trigger conditions;
information of the met CPAC trigger conditions; or
a time interval in which the CPAC trigger conditions are met.

Optionally, the second information includes one or more of:
a first indication that indicates whether the SCG configuration information is configured in the CHO configuration information;
a second indication that indicates a success or a failure of the PSCell addition or the PSCell change or the CPAC if the SCG configuration information is configured in the CHO configuration information;
a third indication that indicates information related to the CHO trigger condition and/or the CPAC trigger condition;
a fourth indication that indicates that an SCG side is a CPAC process; or
PCell identification information corresponding to the target PSCell.

Optionally, the third indication indicates one or more of:
whether the CHO trigger condition and the CPAC trigger condition are met simultaneously;
whether the CHO trigger condition is met;
whether the CPAC trigger condition is met; or
a sequence of the time when the CHO trigger condition is met and the time when the CPAC trigger condition is met.

Optionally, the failure of the terminal includes one or more of:
a failure of the CHO;
a failure of the PSCell addition or the PSCell change or the CPAC;
an RLF;
a failure of an execution of a traditional handover (HO); or
a failure of a CHO recovery.

Optionally, the RLF includes one or more of the following situations:
an RLF occurs in a source PCell before a CHO trigger condition is not met;
a PCell handover is successful, and the terminal has an RLF within a first time of connection with a target PCell; or
the PSCell addition or the PSCell change or the CPAC is successful, and the terminal has an RLF within a second time of connection with a target PSCell.

Optionally, the terminal reports the first information to the network device by way of one or more of:
an SCG failure information message; or
a target report.

Optionally, the target report includes one or more of:
a traditional RLF report;
a newly introduced report;
a Successful Handover Report (SHR); or
a Random-Access Channel (RACH) report.

Optionally, the method further includes:
if the first information is reported to the network device through two or more target reports or SCG failure information messages, the terminal sets association information in the two or more target reports or SCG failure information messages;
where the association information indicates an association relationship between the two or more target reports or SCG failure information messages.

Optionally, the association information includes one or more of:
time stamp information;
identification information of the terminal; or
random numbers.

Optionally, if the terminal has many failures, the first information is the first information of one or more of the failures in many failures.

Optionally, the method further includes:
sending, by the terminal, a fifth indication to the network device, where the fifth indication indicates that the terminal has recorded the first information; and
receiving, by the terminal, a first request sent by the network device;
reporting, by the terminal, the first information to the network device includes:
   reporting, by the terminal, the first information to the network device in response to the first request.

In a second aspect, an embodiment of the present disclosure provides an information processing method, including:
sending, by a network device, CHO configuration information to a terminal, where the CHO configuration information includes SCG configuration information; and
receiving, by the network device, first information reported by the terminal, where the first information is recorded by the terminal in case of failure, and the first information includes information related to the CHO configuration information.

Optionally, the method further includes:
sending, by the network device, the first information to a source Master Node (MN) and/or a target MN, so that the source MN sends the first information to the target MN through a first interface message; or the target MN sends the first information to the source MN through a second interface message; or the target MN sends the first information to a target Secondary Node (SN) through a third interface message, and the target SN sends the first information to the MN through a fourth interface message.

Optionally, the first interface message or the second interface message or the third interface message or the fourth interface message is implemented by one or more of:
a traditional XN interface message, a traditional NG interface message, or a newly introduced XN interface message.

Optionally, the method further includes:
receiving, by the network device, a fifth indication sent by the terminal, where the fifth indication indicates that the terminal has recorded the first information; and
sending, by the network device, a first request to the terminal;
receiving, by the network device, the first information reported by the terminal includes:
   receiving, by the network device, the first information reported by the terminal in response to the first request.

In a third aspect, an embodiment of the present disclosure provides an information processing apparatus applied to a terminal, including: a memory, a transceiver, and a processor;
the memory is configured to store a computer program; the transceiver is configured to transmit and receive data under the control of the processor; and the processor is configured to read the computer program in the memory and perform the following operations:
receiving Conditional Handover (CHO) configuration information sent by a network device, where the CHO configuration information includes Secondary Cell Group (SCG) configuration information; and
if a failure occurs, recording and reporting first information to the network device, where the first information includes information related to the CHO configuration information.

Optionally, the SCG configuration information includes one or more of:
a candidate PSCell and a synchronous reconfiguration command corresponding to the PSCell;
first CPAC configuration information, including one or more candidate PSCells and trigger conditions and synchronous reconfiguration commands corresponding to the candidate PSCells; or
second CPAC configuration information, where the second CPAC configuration information includes a plurality of candidate PSCells and synchronous reconfiguration commands corresponding to the candidate PSCells.

Optionally, the first information includes one or more of:
PSCell-related information;
information related to the first CPAC configuration information and/or the second CPAC configuration information; or
second information;
where the first CPAC configuration information includes one or more candidate PSCells and trigger conditions and synchronous reconfiguration commands corresponding to the candidate PSCells; and the second CPAC configuration information includes a plurality of candidate PSCells and synchronous reconfiguration commands corresponding to the candidate PSCells.

In a fourth aspect, an embodiment of the present disclosure provides an information processing apparatus applied to a network device, including: a memory, a transceiver, and a processor;
the memory is configured to store a computer program; the transceiver is configured to transmit and receive data under the control of the processor; and the processor is configured to read the computer program in the memory and perform the following operations:
sending CHO configuration information to a terminal, where the CHO configuration information includes SCG configuration information; and
receiving first information reported by the terminal, where the first information is recorded by the terminal in case of failure, and the first information includes information related to the CHO configuration information.

Optionally, the processor is further configured to read the computer program in the memory and perform the following operations:
sending the first information to a source MN and/or a target MN, so that the source MN sends the first information to the target MN through a first interface message; or the target MN sends the first information to the source MN through a second interface message; or the target MN sends the first information to a target Secondary Node (SN) through a third interface message, and the target SN sends the first information to the MN through a fourth interface message.

In a fifth aspect, an embodiment of the present disclosure provides an information processing apparatus applied to a terminal, including:
a first receiving unit configured to receive Conditional Handover (CHO) configuration information sent by a network device, where the CHO configuration information includes Secondary Cell Group (SCG) configuration information; and
a first processing unit configured to record and report first information to the network device in case of failure, where the first information includes information related to the CHO configuration information.

In a sixth aspect, an embodiment of the present disclosure provides an information processing apparatus applied to a network device, including:
a first sending unit configured to send CHO configuration information to a terminal, where the CHO configuration information includes SCG configuration information; and
a first receiving unit configured to receive first information reported by the terminal, where the first information is recorded by the terminal in case of failure, and the first information includes information related to the CHO configuration information.

In a seventh aspect, an embodiment of the present disclosure provides a processor-readable storage medium which stores a computer program, where when being executed by a processor, the computer program implements the steps in the aforementioned information processing method.

In the embodiments of the present disclosure, if the terminal fails when receiving the CHO configuration information including the SCG configuration information sent by the network device, the terminal may record and report the first information to the network device, so that the network device can perform optimization according to the first information reported by the terminal, to optimize the CHO and/or CPAC configuration parameters, reduce the CHO and/or CPAC failures, and improve the mobility robustness.

### BRIEF DESCRIPTION OF THE DRAWINGS

FIG. 1 illustrates a first flowchart of an information processing method according to an embodiment of the present disclosure;
FIG. 2 illustrates a second flowchart of an information processing method according to an embodiment of the present disclosure;
FIG. 3 illustrates a first structural diagram of an information processing apparatus according to an embodiment of the present disclosure;
FIG. 4 illustrates a second structural diagram of an information processing apparatus according to an embodiment of the present disclosure;
FIG. 5 illustrates a third structural diagram of an information processing apparatus according to an embodiment of the present disclosure; and
FIG. 6 illustrates a fourth structural diagram of an information processing apparatus according to an embodiment of the present disclosure.

### DETAILED DESCRIPTION

In the embodiments of the present disclosure, the term "and/or" describes an association relationship between associated objects, and means that there may be relationships. For example, A and/or B may mean three situations, i.e., A exists alone, A and B both exist, and B exists alone. The character "/" generally indicates that the contextually associated objects are an "or" relationship.

In the embodiments of the present disclosure, the term "a plurality of" means two or more, and other quantifiers are similar.

The technical solutions in the embodiments of the present disclosure will be clearly and completely described below with reference to the drawings. Obviously, those described are only a part, rather than all, of the embodiments of the present disclosure. Based on the embodiments of the present disclosure, any other embodiment obtained by those of ordinary skill in the art without paying any creative effort should fall within the protection scope of the present disclosure.

The related art discusses the Mobility Robustness Optimization (MRO) for the CHO configuration not including the SCG configuration. When the terminal is configured with the CHO configuration, if a CHO execution condition is met but a handover failure occurs during a CHO execution, or the terminal has an RLF in a source cell before the CHO execution condition is met, the terminal will record some CHO-related configuration parameters and a timer in an RLF report, such as a configured CHO candidate cell, a configured CHO execution condition, a time interval from the reception of a latest CHO configuration by the terminal to the CHO execution, and a time interval from the reception of a latest CHO configuration by the terminal to occurrence of an RLF in a source cell, etc. The terminal sends an available indication to a network device in an uplink completion message to inform the terminal that the RLF report is stored. The network device requests the terminal to report the RLF report through a UE information request message, and the terminal sends a UE information response message to send the RLF report to the network device.

However, as described in the background, in the scenarios where SCG configuration information is configured in CHO configuration information, the related art does not provide an optimization solution for the handover failure. In which, the specific scenarios that can be optimized include:
(1) In a scenario where the CHO configuration information includes the SCG configuration information, after the configured CHO trigger condition is met, both a Primary cell (PCell) and a PSCell need to execute a random-access procedure to access a target PCell and a target PSCell. The configuration of the CHO trigger condition should ensure that when the CHO trigger condition is met, an eligible candidate cell (PCell) and corresponding PSCell can successfully access the target PCell and the target PSCell. If the CHO trigger condition is evaluated to be met, but a PCell handover failure or a PSCell addition/PSCell change failure occurs during execution, or the terminal has an RFL in the source cell before the CHO trigger condition is met, the configured CHO trigger condition is inappropriate and needs to be optimized.

In a scenario where the CHO configuration information includes the CPAC configuration information, since the CHO and CPAC trigger conditions may be evaluated simultaneously, the most ideal state is that the CHO and CPAC trigger conditions can be met simultaneously and both accesses are successful, or when the CHO trigger condition is met, the terminal selects an optimal PSCell to access simultaneously and both accesses are successful. The following scenarios indicate that the configured CHO or CPAC configuration is inappropriate and needs to be optimized (including but not limited to the following scenarios):
when the CHO trigger condition is met, the CPAC trigger condition is not met or not configured, and the terminal successfully executes the CHO but fails to access the selected PSCell;
when the CHO trigger condition is met, the CPAC trigger condition is not met or not configured, and the terminal fails to execute the CHO but successfully accesses the selected PSCell;
when the CHO trigger condition is met, the CPAC trigger condition is not met or not configured, and the terminal fails to execute the CHO and fails to access the selected PSCell;
both the CHO trigger condition and the CPAC trigger condition are met, and the terminal successfully executes the CHO but fails to execute the CPAC;
both the CHO trigger condition and the CPAC trigger condition are met, and the terminal fails to execute the CHO but successfully executes the CPAC;
neither the CHO trigger condition nor the CPAC trigger condition is met, and the terminal has an RLF; and
the CHO trigger condition is not met but the CPAC trigger condition is met, and the terminal has an RLF.

Regarding the problems in the above scenarios, the embodiments of the present disclosure provide an information processing method and apparatus, so as to avoid the failure of the terminal to execute the CHO or the CPAC.

In which, the method and the apparatus are based on the same application concept. Because the principles of the method and the apparatus to solve the problems are similar, the implementations of the apparatus and the method may be referred to each other, and the repeated content is omitted here.

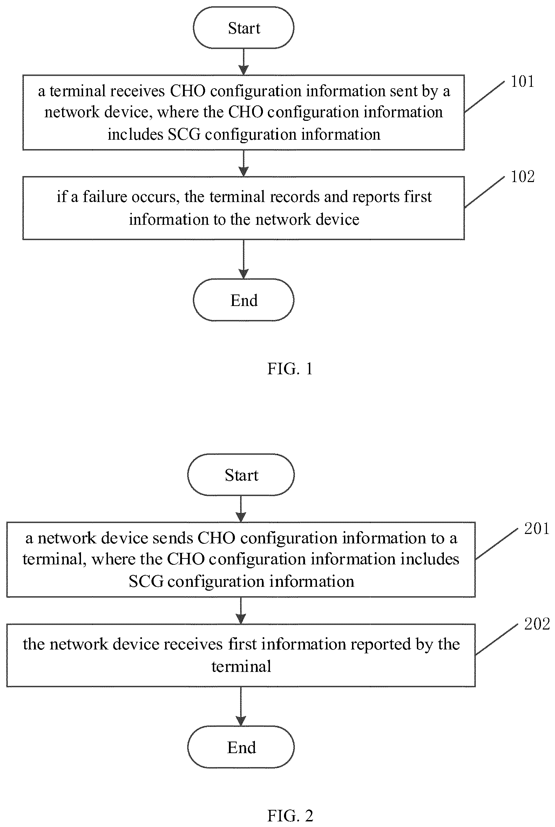

Referring to FIG. 1, which is a flowchart of an information processing method according to an embodiment of the present disclosure. As shown in FIG. 1, the information processing method includes the following steps:
Step 101: a terminal receives CHO configuration information sent by a network device, where the CHO configuration information includes SCG configuration information;
where the SCG configuration information includes one or more of:
a candidate PSCell and a synchronous reconfiguration command corresponding to the PSCell; first CPAC configuration information including one or more candidate PSCells and trigger conditions and synchronous reconfiguration commands corresponding to the candidate PSCells; second CPAC configuration information including a plurality of candidate PSCells and synchronous reconfiguration commands corresponding to the candidate PSCells.

Alternatively, it may also be understood that the SCG configuration information includes one or more of:
a candidate PSCell and a synchronous reconfiguration command corresponding to the PSCell; first CPAC configuration information including one or more candidate PSCells and trigger conditions and synchronous reconfiguration commands corresponding to the candidate PSCells; and CPAC configuration information (i.e., second CPAC configuration information) excluding a trigger condition, where the CPAC configuration information excluding the trigger condition includes a plurality of candidate PSCells and synchronous reconfiguration commands corresponding to the candidate PSCells.

Step 102: If a failure occurs, the terminal records and reports first information to the network device, where the first information includes information related to the CHO configuration information.

In the embodiments of the present disclosure, the failure includes but is not limited to the following situations:
a CHO is failed; a PSCell addition or a PSCell change or a CPAC is failed; an RLF; a HO (traditional handover) execution is failed; and a CHO recovery is failed.

Specifically, the RLF includes one or more of the following situations:
an RLF occurs in a source PCell before a CHO trigger condition is not met;
a PCell handover is successful, and the terminal has an RLF within a first time of connection with a target PCell; or
the PSCell addition or the PSCell change or the CPAC is successful, and the terminal has an RLF within a second time of connection with a target PSCell.

In which, the first time and the second time may be set as needed. For example, the first time means that the time from the handover executed by the terminal to occurrence of the RLF in the target PCell is less than a certain threshold. The second time means that the time from the PSCell addition or the PSCell change or the CPAC executed by the terminal to occurrence of the RLF in the target PSCell is less than a certain threshold.

In the embodiments of the present disclosure, the first information includes one or more of:
PSCell-related information; time information; information related to the first CPAC configuration information and/or the second CPAC configuration information; or second information.

In which, the meanings of the first CPAC configuration information and the second CPAC configuration information are the same as those described above.

In which, the PSCell-related information includes one or more of:
identification information of the target PSCell; RACH information of the target PSCell; a measurement result of the target PSCell; or identification information of the source PSCell.

In which, the identification information of the target PSCell may be a Physical Cell Identifier (PCI) and a frequency point or a Cell Global Identifier (CGI). The RACH information of the target PSCell mainly includes some RACH resource information used by the terminal in a process of accessing the PSCell and some information generated in a RACH process. The measurement result of the target PSCell may include a measurement result at a cell level and a measurement result at a beam level. The identification information of the source PSCell may be a PCI and a frequency point or a CGI.

In which, the time information includes a time interval between a first event and a second event, where,
the first event includes one or more of: a reception of the CHO configuration information, a reception of the CPAC configuration information, an execution of a CHO, an execution of a PSCell addition, an execution of a PSCell change, an execution of a CPAC, a failure of the execution of the PSCell addition, a failure of the execution of the PSCell change, a failure of the execution of the CPAC, meeting of a CHO trigger condition, or meeting of a CPAC trigger condition;
the second event includes one or more of: a failure of the execution the PSCell addition, a failure of the execution the PSCell change, a failure of the execution the CPAC, an execution of a PSCell addition, an execution of a PSCell change, an execution of a CPAC, reporting of the failure of the execution the PSCell addition or the PSCell change or the CPAC, a Radio Link Failure (RLF) of the terminal in the target PSCell, meeting of the CHO trigger condition, or meeting of the CPAC trigger condition.

Specifically, the time interval between the first event and the second event includes one or more of:
a time interval from the reception of the CHO configuration information or the CPAC configuration information to the failure of the PSCell addition or the PSCell change or the CPAC;
a time interval from the execution of the CHO or the PSCell addition or the PSCell change or the CPAC to the failure of the PSCell addition or the PSCell change or the CPAC;
a time interval from the reception of the CHO configuration information or the CPAC configuration information to the execution of the PSCell addition or the PSCell change or the CPAC;
a time interval from the failure of the PSCell addition or the PSCell change or the CPAC to the reporting of the failure;
a time interval from the reception of the CHO configuration information or the CPAC configuration information to the RLF of the terminal in the target PSCell;
a time interval from the execution of the CHO or the CPAC to the RLF of the terminal in the target PSCell;
a time interval from a time when the CHO trigger condition is met to a time when the CPAC trigger condition is met; or
a time interval from a time when the CPAC trigger condition is met to a time when the CHO trigger condition is met.

In which, the information related to the first CPAC configuration information and/or the second CPAC configuration information includes one or more of:
identification information of a candidate target PSCell; latest measurement result information of the candidate target PSCell; CPAC trigger conditions; information of the met CPAC trigger conditions; or a time interval in which the CPAC trigger conditions are met (e.g., a time interval between the time when two CPAC trigger conditions of a candidate PSCell are met, etc.).

In which, the identification information of the candidate target PSCell may be a PCI and a frequency point or a CGI, and the identification information of respective candidate target PSCells may be reported in the form of a list.

The "latest measurement result information" may be understood as the measurement result information that is temporally closest to the implementation of the solution of the embodiment of the present disclosure, or the measurement result information obtained when a failure is detected.

The CPAC trigger condition is a trigger condition configured by a network for each candidate PSCell, and may be a trigger condition of A3, A5, A4 or B1. The network may configure one or two trigger conditions for each candidate PSCell.

The information of the met CPAC trigger condition mainly includes:
(1) whether a first CPAC trigger condition configured for each candidate PSCell is met;
(2) whether a second CPAC trigger condition configured for each candidate PSCell is met;
(3) the CPAC trigger condition firstly met by each candidate PSCell may be the first CPAC trigger condition configured for each candidate PSCell or the second CPAC trigger condition configured for each candidate PSCell.

In which, the above information of the candidate target PSCell may include information of all candidate PSCell cells corresponding to all candidate PCell cells, or information of all candidate PSCell cells corresponding to the corresponding target PCCell which is failed, or information of a rget PSCell cell corresponding to the corresponding target PCCell which is failed.

The time interval in which the CPAC trigger conditions are met means a time interval from a time when one CPAC trigger condition is met to a time when another CPAC trigger condition is met (e.g., a time interval from a time when a first CPAC trigger condition is met to a time when a second CPAC trigger condition is met, in case of two CPAC trigger conditions), where the network device may configure the CPAC trigger conditions for each candidate PSCell. Therefore, the two CPAC trigger conditions here may be understood as the CPAC trigger conditions configured by the network device for the same candidate PSCell.

In which, the second information includes one or more of:
a first indication that indicates whether the SCG configuration information is configured in the CHO configuration information; a second indication that indicates a success or a failure of the PSCell addition or the PSCell change or the CPAC if the SCG configuration information is configured in the CHO configuration information; a third indication that indicates information related to the CHO trigger condition and/or the CPAC trigger condition; a fourth indication that indicates that an SCG side is a CPAC process; or PCell identification information corresponding to the target PSCell.

In which, the third indication indicates one or more of: whether the CHO trigger condition and the CPAC trigger condition are met simultaneously; whether the CHO trigger condition is met; whether the CPAC trigger condition is met; or a sequence of the time when the CHO trigger condition is met and the time when the CPAC trigger condition is met.

The fourth indication specifically may indicate that the latest SCG side is a CPAC process, and the "latest" may be understood as being temporally closest to the implementation of the solution of the embodiment of the present disclosure.

In the embodiments of the present disclosure, the terminal may report the first information to the network device by way of one or more of:
an SCG failure information message; or a target report.

In which, the target report may include one or more of a traditional RLF report; a newly introduced report; an SHR; or a RACH report, etc.

In which, "newly introduced" may also be called "newly defined". In the embodiment of the present disclosure, the newly introduced report includes: a newly introduced report for recording the SCG-side first information and/or a newly introduced report for recording the SCG-side first information and the MCG-side first information.

In the embodiment of the present disclosure, the terminal may report the first information to the network device through two or more target reports or the SCG failure information message. For example, the terminal may report the first information through two or more target reports, or through two or more SCG failure information messages, or through one or more target reports and one or more SCG failure information messages. In this case, the terminal may set association information in the two or more target reports or the SCG failure information messages; where the association information indicates an association relationship between the two or more target reports or the SCG failure information message.

In which, the association information includes one or more of:
time stamp information, such as absolute time information or relative time information;
identification information of the terminal, such as Cell RNTI (C-RNTI) information; or
random numbers, such as the same random number, etc.

Optionally, if the terminal has many failures, the first information is the first information of one or more of the failures in many failures, thereby improving the recording flexibility. For example, if the terminal fails twice, the first information may be that corresponding to the first failure or the second failure.

In the embodiment of the present disclosure, if a failure occurs when the terminal receives the CHO configuration information that includes the SCG configuration information and is sent by the network device, the terminal may record and report the first information to the network device, so that the network device can perform optimization according to the first information reported by the terminal to optimize the CHO and/or CPAC configuration parameters, reduce the CHO and/or CPAC failures, and improve the mobility robustness.

On the basis of the above embodiment, the terminal may send to the network device a fifth indication indicating that the terminal has recorded the first information. The terminal receives a first request sent by the network device. Accordingly, in step 101, the terminal reports the first information to the network device in response to the first request. In which, the fifth indication may be an available indication.

In the embodiments of the present disclosure, if the first information is carried by two or more target reports or SCG failure information messages, the terminal may send the fifth indication to the network device respectively for the two or more target reports or SCG failure messages, or the terminal may also send one fifth indication to the network device for the two or more target reports or SCG failure messages, i.e., use the same fifth indication to indicate to the network device that the first information is recorded. Accordingly, the network device may send one or more first requests for one or more fifth indications of the terminal, and the terminal may report the first information through one or more responses.

Referring to FIG. 2, which is a flowchart of an information processing method according to an embodiment of the present disclosure. As shown in FIG. 2, the information processing method includes the following steps:
step 201: a network device sends CHO configuration information to a terminal, where the CHO configuration information includes SCG configuration information;
step 202: the network device receives first information reported by the terminal, where the first information is recorded by the terminal in case of failure, and the first information includes information related to the CHO configuration information.

In which, the contents and meanings of the SCG configuration information and the first information may refer to the description in the aforementioned method embodiments.

In the embodiment of the present disclosure, if a failure occurs when the terminal receives the CHO configuration information that includes the SCG configuration information and is sent by the network device, the terminal may record and report the first information to the network device, so that the network device can perform optimization according to the first information reported by the terminal to optimize the CHO and/or CPAC configuration parameters, reduce the CHO and/or CPAC failures, and improve the mobility robustness.

Here, the network device refers to a node that currently receives the first information, and this node is not necessarily a node where the terminal is located in case of failure, so the current node needs to transmit the received first information. Therefore, on the basis of the above embodiment, the network device may send the first information to a source MN and/or a target MN when the terminal fails at that time, so that the source MN can send the first information to the target MN through a first interface message; or the target MN sends the first information to the source MN through a second interface message; or the target MN sends the first information to a target Secondary Node (SN) through a third interface message, and the target SN sends the first information to the MN through a fourth interface message.

In which, the first interface message or the second interface message or the third interface message or the fourth interface message is implemented by one or more of:
a traditional XN interface message, a traditional NG interface message, or a newly introduced XN interface message.

Specifically, the transmission of the first information between the MN nodes may involve an XN or NG interface, and may use an XN interface message access and mobility indication or an NG interface message downlink/uplink RAN configuration transfer in the related art, or may use a newly introduced message.

The transmission of the first information between the MN and the SN may involve an XN interface, and may use an XN interface message SCG failure information report and an SCG failure transfer message in the related art, or may use a newly introduced message.

It should be noted that the first information transmitted through the above interface message may be all or part of the first information.

Optionally, in the above embodiment, the network device receives from the terminal a fifth indication indicating that the terminal has recorded the first information, and sends a first request to the terminal. Accordingly, in step 202, the network device receives the first information reported by the terminal in response to the first request.

After receiving the first information, the network device may perform the corresponding optimization, such as adjusting the CHO configuration, adjusting the CPAC configuration, etc.

Hereinafter, the information processing method of the embodiment of the present disclosure will be described in detail in conjunction with the specific embodiments.

The embodiment of the present disclosure provides an information processing method to facilitate the network optimization. Specifically, a terminal receives CHO configuration information sent by a network device, where the CHO configuration information includes SCG configuration information corresponding to each candidate cell (candidate PCell). The SCG configuration information may include a SCG-side synchronous reconfiguration command, or CPAC configuration information with a trigger condition, or a CPAC configuration without a trigger condition (i.e., the configuration includes candidate PSCells and their synchronous reconfiguration commands corresponding to the candidate PSCells, but does not include a trigger condition). When evaluating that the CHO trigger condition is met or both the CHO trigger condition and the CPAC trigger condition are met, and failing to execute the PCell handover and/or the PSCell addition/the PSCell change/the CPAC, the terminal records and reports failure-related information (i.e., the first information) to the network device; or before the CHO trigger condition is not met, the terminal records and reports failure-related information (i.e. the first information) to the network device under a failure scenario where an RLF occurs in the source cell.

In an embodiment of the present disclosure, the CHO configuration information includes a SCG-side synchronous reconfiguration command. This embodiment may include the following steps:
step 301: the network device configures the CHO configuration information for the terminal, and configures corresponding PSCell and a synchronous reconfiguration command thereof for each candidate target PCell cell in the CHO configuration information;
step 302: the terminal evaluates the CHO trigger condition and assumes that one of the following situations occurs:
   (1) the terminal evaluates that the CHO trigger condition is met, and executes the CHO and the corresponding PSCell addition or PSCell change simultaneously; but the PCell handover and the PSCell addition or the PSCell change are failed;
   (2) the terminal evaluates that the CHO trigger condition is met, and executes the CHO and the corresponding PSCell addition or PSCell change simultaneously; the PCell handover is failed and the PSCell addition or the PSCell change is successful;
   (3) the terminal evaluates that the CHO trigger condition is met, and executes the CHO and the corresponding PSCell addition or PSCell change simultaneously; the PCell handover is successful, and the PSCell addition or the PSCell change is failed;
   (4) the terminal evaluates that the CHO trigger condition is met, and executes the CHO and the corresponding PSCell addition or PSCell change simultaneously; the PCell handover and the PSCell addition or the PSCell change are successful, but an RLF occurs in the target PCell in a short time;
   (5) the terminal evaluates that the CHO trigger condition is met, and executes the CHO and the corresponding PSCell addition or PSCell change simultaneously; the PCell handover, the PSCell addition or the PSCell change are successful, but an RLF occurs in the target PSCell in a short time;
   (6) the terminal evaluates that the CHO trigger condition is met, and executes the CHO and the corresponding PSCell addition or PSCell change simultaneously; the PCell handover and the PSCell addition or the PSCell change are successful, but an RLF occurs in both the target PCell and the target PSCell in a short time;
   (7) the terminal has an RLF before the terminal evaluates that the CHO trigger condition is met;
   (8) in the process of evaluating the CHO trigger condition, the terminal receives and fails to execute a legacy HO (traditional HO) command, and succeeds or fails to execute a CHO recovery;
   (9) the terminal fails to execute the CHO, and succeeds or fails to execute the CHO recovery; and
   (10) the terminal has an RLF, and succeeds or fails to execute the CHO recovery.

Step 303: the terminal records the first information including one or more of:
(1) identification information of the target PSCell, which may be a PCI and a frequency point or a CGI;
(2) RACH information of the target PSCell, mainly including some RACH resource information used by the terminal in the process of accessing the PSCell and some information generated in the RACH process;
(3) a measurement result of the target PSCell; if being capable of measuring the measurement result of the target PSCell, the terminal may report the measurement result of the PSCell, which may include a measurement result at a cell level and a measurement result at a beam level;
(4) if PSCells have been existed, the terminal records identification information of a source PSCell, which may be a PCI and a frequency point or a CGI;
(5) a time interval from the reception of the CHO configuration information to the failure of the PSCell addition or the PSCell change;
(6) a time interval from the execution of the CHO or the PSCell addition or the PSCell change to the failure of the PSCell addition or the PSCell change;
(7) a time interval from the reception of the CHO configuration information to the execution of the PSCell addition or the PSCell change;
(8) a time interval from the failure of the PSCell addition or the PSCell change to the reporting of the failure;
(9) a time interval from the reception of the CHO configuration information to the occurrence of the RLF by the terminal in the target PSCell;
(10) a time interval from the execution of the CHO to the occurrence of the RLF by the terminal in the target PSCell;
(11) a first indication that indicates whether the SCG configuration information is configured in the CHO configuration information;
(12) a second indication that indicates the success or the failure of the PSCell addition or the PSCell change or the CPAC, if the SCG configuration information is configured in the CHO configuration information;
(13) a third indication that indicates whether the CHO trigger condition is met; or
(14) PCell identification information corresponding to the target PSCell, which may be a PCI and a frequency point or a CGI.

Step 304: the terminal may record the first information in one or more of the following modes:
mode 1: the first information may be recorded using an RLF report in the related art, that is, the above information is reported in the current RLF report, and an Information element (IE) may be separately introduced to entirely store the above information, or the above information is partially stored in an outer layer and partially stored in the newly introduced IE, or all the above information is stored in the outer layer without introducing a new IE to include these contents;
mode 2: the above failure information is reported using an SCG failure information message. In a scenario where the CHO is successfully executed but the PSCell addition or the PSCell change is failed, the MN is connected, so that the terminal can report the SCG failure information message to the MN, thereby reporting the above information in the SCG failure information message;
mode 3: a new SCG-side RLF report is introduced to record the SCG-side first information, that is, the first information of the CHO is recorded in the current RLF report, while the SCG-side first information is recorded in the newly introduced SCG-side RLF report. However, how to associate the two RLF reports should be considered when storing the failure information separately.

In which, the association mode may include a mode of using a timestamp, that is, the same timestamp information is added into the two RLF reports. The timestamp information may be absolute or relative time. Alternatively, terminal identification information may be added into the two RLF reports to associate the same terminal. Alternatively, random numbers may be generated and a same random number may be added into the two RLF reports for identification. The association information may be added into an RLF report and an SCG failure information message simultaneously. In addition, the newly introduced available indication of the SCG-side RLF report and an acquisition process thereof may reuse the procedure of the current RLF report, or a new available indication or a new reporting mode may be introduced separately.

Mode 4: for the above scenario, a report is newly introduced to record the first information, that is, all the first information (the MCG-side first information and the SCG-side first information) are recorded in the newly introduced report, and meanwhile, a new available indication mode and a new reporting mode may be introduced for the newly introduced report.

Mode 5: the above information is recorded in the reports of other related arts, such as an SHR, a RACH report, etc.

Step 305: the terminal reports the first information to the network device.

There are two optional modes for reporting the first information:

### Mode 1:

(1) When sending an uplink completion message, the terminal sends a first indication (e.g., an available indication) to the network device, so as to indicate to the network device that the terminal has recorded the first information. In which, the contents included in the first information may be indicated together or separately. When the terminal accesses a PSCell again, an available indication of the information related to the failure of the PSCell addition or the PSCell change may also be sent to a current SN separately through an SRB3 (Signaling Radio Bearer, SRB), then from the current SN to a current MN, next from the current MN to a source MN, and finally from the source MN to a node where a source and/or target PSCell failed in the last PSCell addition or PSCell change is located, so as to perform optimization. The terminal may also report an indication message in an SCG failure information message to indicate that the terminal stores the information related to the failure of the PSCell addition or the PSCell change.
(2) When receiving the available indication sent by the terminal, the network device sends a first request (e.g., a terminal information request message or any other request message) to request the terminal to report the recorded first information;
(3) After receiving the first request sent by the network device, the terminal sends a terminal information response message or any other response message to report the recorded first information.

Mode 2: the terminal reports an SCG failure information message which includes the first information.

Step 306: after the network device acquires the first information, the current node is not necessarily a handover source network device node or a target network device node where the problem occurs, so the current node needs to send the current failure information to the handover source network device node or the target network device node. The transfer of the failure information between the nodes may involve an XN interface or an NG interface, and an XN interface message ACCESS AND MOBILITY INDICATION or an NG interface message DOWNLINK or UPLINK RAN CONFIGURATION TRANSFER in the related art may be used, or a newly defined message may also be used.

Step 307: after analyzing the first information, the handover source network device node may need to notify the handover target network device node to perform optimization; and similarly, after analyzing the first information, the handover target network device node may also need to notify the handover source network device node to perform optimization. At this time, it is necessary to transfer the first information between the source network device node and the target network device node. The transfer may involve an XN interface or an NG interface, and an XN interface message ACCESS AND MOBILITY INDICATION or an NG interface message DOWNLINK or UPLINK RAN CONFIGURATION TRANSFER in the related art may be used, or a newly introduced message may also be used.

Step 308: when the recorded first information further includes the SCG-side first information, the MN node needs to send the SCG-side first information to the SN for analysis; the SN may consider that the MN node needs to be optimized after the analysis, and it is necessary to send a message again to notify the MN. The transfer of the SCG-side first information and other related information between the MN node and the SN node may involve an XN interface, and an XN interface message SCG FAILURE INFORMATION REPORT and an SCG FAILURE TRANSFER message in the related art may be used, or a newly introduced message may also be used.

In an embodiment of the present disclosure, the CHO configuration information includes CPAC configuration information. The process of this embodiment may include:
Step 401: the network device configures CHO configuration information for the terminal, and configures a set of CPAC configuration information (including trigger conditions) for each candidate target PCell cell in the CHO configuration information.
Step 402: the terminal evaluates the CHO and CPAC trigger conditions, and assumes that one of the following situations occurs:
   when the terminal evaluates that a CHO trigger condition is met, a CPAC trigger condition is not met, and the terminal successfully executes a CHO but fails to access the selected PSCell;
   when the terminal evaluates that a CHO trigger condition is met, a CPAC trigger condition is not met, and the terminal fails to execute a CHO but successfully accesses the selected PSCell;
   when the terminal evaluates that a CHO trigger condition is met, a CPAC trigger condition is not met, and the terminal fails to execute a CHO and also fails to access the selected PSCell;
   the terminal evaluates that both a CHO trigger condition and a CPAC trigger condition are met, and the terminal successfully executes a CHO but fails to execute a CPAC;
   the terminal evaluates that both a CHO trigger condition and a CPAC trigger condition are met, and the terminal fails to execute a CHO but successfully executes a CPAC;
   the terminal evaluates that both a CHO trigger condition and a CPAC trigger condition are met, and the terminal fails to execute a CHO and also fails to execute a CPAC;
   the terminal evaluates that both a CHO trigger conditions and a CPAC trigger condition are not met, and the terminal has an RLF;
   the terminal evaluates that a CHO trigger condition is not met and a CPAC trigger condition is met, and the terminal has an RLF;
   the terminal successfully accesses the PCcell and the PSCell, but an RLF occurs in a target PC cell and/or a target PSCell in a short time;
   the terminal evaluates that a legacy HO command is received during evaluation of the CHO and CPAC trigger conditions, and the terminal fails to execute a legacy HO, but succeeds in or fails to execute a CHO recovery;
   the terminal has an RLF, and succeeds in or fails to execute a CHO recovery; and
   the terminal fails to execute a CHO, but succeeds in or fails to execute a CHO recovery.
Step 403: the terminal records the first information including one or more of:
   identification information of the target PSCell, which may be a PCI and a frequency point or a CGI;
   RACH information of the target PSCell, mainly including some RACH resource information used by the terminal in the process of accessing the PSCell and some information generated in the RACH process;
   a measurement result of the target PSCell; if being capable of measuring the measurement result of the target PSCell, the terminal may report the measurement result of the PSCell, which may include a measurement result at a cell level and a measurement result at a beam level;
   if PSCells have been existed, the terminal records identification information of a source PSCell, which may be a PCI and a frequency point or a CGI;
   a time interval from the reception of the CHO configuration information or the CPAC configuration information to the failure of the CPAC;
   a time interval from the execution of the CHO or the CPAC to the failure of the CPAC;
   a time interval from the reception of the CHO configuration information or the CPAC configuration information to the execution of the CPAC;
   a time interval from the failure of the CPAC to the reporting of the failure;
   a time interval from the reception of the CHO configuration information or the CPAC configuration information to the occurrence of the RLF by the terminal in the target PSCell;
   a time interval from the execution of the CHO or the CPAC to the occurrence of the RLF by the terminal in the target PSCell;
   a time interval from a time when the CHO trigger condition is met to a time when the CPAC trigger condition is met;
   a time interval from a time when the CPAC trigger condition is met to a time when the CHO trigger condition is met;
   identification information of a candidate target PSCell, which may be a PCI and a frequency point or a CGI;
   trigger conditions of the CPAC configuration, i.e., A3, A5, A4, B1, etc.;
   the met CPAC trigger conditions, i.e., whether a first CPAC trigger condition is met and whether a second CPAC trigger condition is met;
   a time interval between the time when the CPAC trigger conditions are met, for example a time interval from a time when a first CPAC trigger condition is met to a time when a second CPAC trigger condition is met in case of two CPAC trigger conditions; where the network device may configure the CPAC trigger conditions for each candidate PSCell. Therefore, the two CPAC trigger conditions here may be understood as the CPAC trigger conditions configured by the network device for the same candidate PSCell;
   a first indication that indicates whether the SCG configuration information is configured in the CHO configuration information;
   a second indication that indicates the success or the failure of the CPAC if the SCG configuration information is configured in the CHO configuration information;
   a third indication that indicates whether the CHO and CPAC trigger conditions are met simultaneously; and/or indicates whether a CHO trigger condition is met; and/or indicates whether a CPAC trigger condition is met; and/or indicates whether a CHO trigger condition is firstly met or a CPAC trigger condition is firstly;
   a fourth indication that indicates that an SCG side is a CPAC process; or
   PCell identification information corresponding to the target PSCell, which may be a PCI and a frequency point or a CGI.
Step 404: the terminal may record the first information in one or more of the following modes:
   mode 1: the first information may be recorded using an RLF report in the related art, that is, the above information is reported in the current RLF report, and an Information element (IE) may be separately introduced to entirely store the above information, or the above information is partially stored in an outer layer and partially stored in the newly introduced IE, or all the above information is stored in the outer layer without introducing a new IE to include these contents;
   mode 2: the first information is reported using an SCG failure information message. In a scenario where the CHO is successfully executed but the CPAC is failed, the MN is connected, so that the terminal can report the SCG failure information message to the MN, thereby reporting the first information in the SCG failure information message, such as CPAC failure information;
   mode 3: a new SCG-side RLF report is introduced to record the SCG-side first information, that is, the first information of the CHO is recorded in the current RLF report, while the SCG-side first information is recorded in the newly introduced SCG-side RLF report. However, how to associate the two RLF reports should be considered when storing the failure information separately.

In which, the association mode may include a mode of using a timestamp, that is, the same timestamp information is added into the two RLF reports. The timestamp information may be absolute or relative time. Alternatively, terminal identification information may be added into the two RLF reports to associate the same terminal. Alternatively, random numbers may be generated and a same random number may be added into the two RLF reports for identification. The association information may be added into an RLF report and an SCG failure information message simultaneously. In addition, the newly introduced available indication of the SCG-side RLF report and an acquisition process thereof may reuse the procedure of the current RLF report, or a new available indication or a new reporting mode may be introduced separately.

Mode 4: for the above scenario, a report is newly introduced to record the first information, that is, all the first information (the MCG-side first information and the SCG-side first information) are recorded in the newly introduced report, and meanwhile, a new available indication mode and a new reporting mode may be introduced for the newly introduced report.

Mode 5: the above information is recorded in the reports of other related arts, such as an SHR, a RACH report, etc.

Step 405: the terminal reports the first information to the network device.

There are two optional modes for reporting the first information:

### Mode 1:

(1) When sending an uplink completion message, the terminal sends a first indication (e.g., an available indication) to the network device, so as to indicate to the network device that the terminal has recorded the first information. In which, the CHO failure-related information and the CPAC failure-related information may be indicated together or separately. When the terminal accesses a PSCell again, an available indication of the CPAC failure-related information may also be sent to a current SN separately through an SRB3, then from the current SN to a current MN, next from the current MN to a source MN, and finally from the source MN to a node where a source and/or target PSCell failed in the last CPAC is located, so as to perform optimization. The terminal may also report an indication message in an SCG failure information message to indicate that the terminal stores the CPAC failure-related information.
(2) When receiving the available indication sent by the terminal, the network device sends a first request (e.g., a terminal information request message or any other request message) to request the terminal to report the recorded failure-related information;
(3) After receiving the first request sent by the network device, the terminal sends a terminal information response message or any other response message to report the recorded first information.

Mode 2: the terminal reports an SCG failure information message.

Step 406: after the network device acquires the first information, the current node is not necessarily a handover source network device node or a target network device node where the problem occurs, so the current first information should be sent to the handover source network device node or the target network device node. The transfer of the first information between the nodes may involve an XN interface or an NG interface. For example, an XN interface message ACCESS AND MOBILITY INDICATION or an NG interface message DOWNLINK or UPLINK RAN CONFIGURATION TRANSFER in the related art may be used, or a newly introduced message may also be used.

Step 407: after analyzing the first information, the handover source network device node may need to notify the handover target network device node to perform optimization; and similarly, after analyzing the first information, the handover target network device node may also need to notify the handover source network device node to perform optimization. At this time, it is necessary to transfer the first information between the source network device node and the target network device node. The transfer may involve an XN interface or an NG interface, and an XN interface message ACCESS AND MOBILITY INDICATION or an NG interface message DOWNLINK or UPLINK RAN CONFIGURATION TRANSFER in the related art may be used, or a newly introduced message may also be used.

Step 408: when the recorded first information further includes the SCG-side first information, the MN node needs to send the SCG-side first information to the SN for analysis; the SN may consider that the MN node needs to be optimized after the analysis, and it is necessary to send a message again to notify the MN. The transfer of the SCG-side first information and other related information between the MN node and the SN node may involve an XN interface, and an XN interface message SCG FAILURE INFORMATION REPORT and an SCG FAILURE TRANSFER message in the related art may be used, or a newly introduced message may also be used.

In an embodiment of the present disclosure, the CHO configuration information includes CPAC configuration information that does not include any trigger condition. The process of this embodiment may include:
Step 501: the network device configures CHO configuration information for the terminal, and configures a set of CPAC configuration information (excluding a trigger condition) for each candidate target PCell cell in the CHO configuration information, that is, for each CHO candidate cell, the network device is configured with a plurality of candidate PCells and corresponding configuration information thereof. When the terminal evaluates that a CHO trigger condition is met, the terminal performs a PCell handover, and meanwhile, the terminal may select a candidate PSCell with a best signal quality for access.
Step 502: the terminal evaluates the CHO trigger condition, and assumes that one of the following situations occurs:
   when the terminal evaluates that the CHO trigger condition is met, the terminal successfully executes a CHO but fails to access the selected PSCell;
   when the terminal evaluates that the CHO trigger condition is met, the terminal fails to execute a CHO but successfully accesses the selected PSCell;
   when the terminal evaluates that the CHO trigger condition is met, the terminal fails to execute a CHO and also fails to access the selected PSCell;
   when the terminal evaluates that the CHO trigger condition is not met, the terminal has an RLF;
   the terminal successfully accesses the PCcell and the PSCell, but an RLF occurs in a target PC cell and/or a target PSCell in a short time;
   the terminal evaluates that a legacy HO command is received during evaluation of the CHO trigger condition, and the terminal fails to execute a legacy HO, but succeeds in or fails to execute a CHO recovery;
   the terminal has an RLF, and succeeds in or fails to execute a CHO recovery; and
   the terminal fails to execute a CHO, but succeeds in or fails to execute a CHO recovery.
Step 503: the terminal records the first information including one or more of:
   identification information of the target PSCell, which may be a PCI and a frequency point or a CGI;
   RACH information of the target PSCell, mainly including some RACH resource information used by the terminal in the process of accessing the PSCell and some information generated in the RACH process;
   a measurement result of the target PSCell; if being capable of measuring the measurement result of the target PSCell, the terminal may report the measurement result of the PSCell, which may include a measurement result at a cell level and a measurement result at a beam level;
   if PSCells have been existed, the terminal records identification information of a source PSCell, which may be a PCI and a frequency point or a CGI;
   a time interval from the reception of the CHO configuration information to the failure of the PSCell addition or the PSCell change;
   a time interval from the execution of the CHO or the PSCell addition or the PSCell change to the failure of the PSCell addition or the PSCell change;
   a time interval from the reception of the CHO configuration information to the execution of the PSCell addition or the PSCell change;
   a time interval from the failure of the PSCell addition or the PSCell change to the reporting of the failure;
   a time interval from the reception of the CHO configuration information to the occurrence of the RLF by the terminal in the target PSCell;
   a time interval from the execution of the CHO to the occurrence of the RLF by the terminal in the target PSCell;
   identification information of a candidate target PSCell, which may be a PCI and a frequency point or a CGI;
   a first indication that indicates whether the SCG configuration information is configured in the CHO configuration information;
   a second indication that indicates the success or the failure of the PSCell addition or the PSCell change if the SCG configuration information is configured in the CHO configuration information;
   a third indication that indicates whether the CHO trigger condition is met; or
   PCell identification information corresponding to the target PSCell, which may be a PCI and a frequency point or a CGI.
Step 504: the terminal may record the first information in one or more of the following modes:
   Mode 1: the first information may be recorded using an RLF report in the related art, that is, the above information is reported in the current RLF report, and an Information element (IE) may be separately introduced to entirely store the above information, or the above information is partially stored in an outer layer and partially stored in the newly introduced IE, or all the above information is stored in the outer layer without introducing a new IE to include these contents.
   Mode 2: the first information is reported using an SCG failure information message. In a scenario where the CHO is successfully executed but the PSCell addition or the PSCell change is failed, the MN is connected, so that the terminal can report the SCG failure information message to the MN, thereby reporting the failure information of the PSCell addition or the PSCell change in the SCG failure information message.
   Mode 3: a new SCG-side RLF report is introduced to record the SCG-side first information, that is, the first information of the CHO is recorded in the current RLF report, while the SCG-side first information is recorded in the newly introduced SCG-side RLF report. However, how to associate the two RLF reports should be considered when storing the failure information separately.

In which, the association mode may include a mode of using a timestamp, that is, the same timestamp information is added into the two RLF reports. The timestamp information may be absolute or relative time. Alternatively, terminal identification information may be added into the two RLF reports to associate the same terminal. Alternatively, random numbers may be generated and a same random number may be added into the two RLF reports for identification. The association information may be added into an RLF report and an SCG failure information message simultaneously. In addition, the newly introduced available indication of the SCG-side RLF report and an acquisition process thereof may reuse the procedure of the current RLF report, or a new available indication or a new reporting mode may be introduced separately.

Mode 4: for the above scenario, a report is newly introduced to record the first information, that is, all the first information (the MCG-side first information and the SCG-side first information) are recorded in the newly introduced report, and meanwhile, a new available indication mode and a new reporting mode may be introduced for the newly introduced report.

Mode 5: the above information is recorded in the reports of other related arts, such as an SHR, a RACH report, etc.

Step 505: the terminal reports the first information to the network device.

There are two optional modes for reporting the first information:

### Mode 1:

(1) When sending an uplink completion message, the terminal sends a first indication (e.g., an available indication) to the network device, so as to indicate to the network device that the terminal has recorded the first information, i.e., indicate to the network device that the terminal records the CHO failure-related information and/or the information related to the failure of the PSCell addition or the PSCell change. The above information may be indicated together or separately. When the terminal accesses a PSCell again, an available indication of the information related to the failure of the PSCell addition or the PSCell change may also be sent to a current SN separately through an SRB3, then from the current SN to a current MN, next from the current MN to a source MN, and finally from the source MN to a node where a source and/or target PSCell failed in the last PSCell addition or PSCell change is located, so as to perform optimization. The terminal may also report an indication message in an SCG failure information message to indicate that the terminal stores the information related to the failure of the PSCell addition or the PSCell change.
(2) When receiving the available indication sent by the terminal, the network device sends a first request (e.g., a terminal information request message or any other request message) to request the terminal to report the recorded failure-related information;
(3) After receiving the first request sent by the network device, the terminal sends a terminal information response message or any other response message to report the recorded first information.

Mode 2: the terminal reports an SCG failure information message.

Step 506: after the network device acquires the first information, the current node is not necessarily a handover source network device node or a target network device node where the problem occurs, so the current first information should be sent to the handover source network device node or the target network device node. The transfer of the first information between the nodes may involve an XN interface or an NG interface. An XN interface message ACCESS AND MOBILITY INDICATION or an NG interface message DOWNLINK or UPLINK RAN CONFIGURATION TRANSFER in the related art may be used, or a newly introduced message may also be used.

Step 507: after analyzing the first information, the handover source network device node may need to notify the handover target network device node to perform optimization; and similarly, after analyzing the first information, the handover target network device node may also need to notify the handover source network device node to perform optimization. It is necessary to transfer the first information between the source network device node and the target network device node. The transfer of the first information may involve an XN interface or an NG interface, and an XN interface message ACCESS AND MOBILITY INDICATION or an NG interface message DOWNLINK or UPLINK RAN CONFIGURATION TRANSFER in the related art may be used, or a newly introduced message may also be used.

Step 508: when the recorded first information further includes the SCG-side first information, the MN node needs to send the SCG-side first information to the SN for analysis; the SN may consider that the MN node needs to be optimized after the analysis, and it is necessary to send a message again to notify the MN. The transfer of the SCG-side first information and other related information between the MN node and the SN node may involve an XN interface, and an XN interface message SCG FAILURE INFORMATION REPORT and an SCG FAILURE TRANSFER message in the related art may be used, or a newly introduced message may also be used.

In an embodiment of the present disclosure, the terminal fails to execute the CHO and the CHO recovery process. In this case, when evaluating that the CHO trigger condition is met, the terminal will execute the CHO. In a case where the terminal fails to execute the CHO, if the terminal cell selects a CHO candidate cell, the terminal will execute the CHO recovery process. At this time, if the CHO recovery process is failed, the terminal will need to record the continuous failure-related information. When the CHO is executed for the first time, a process of a PSCell addition or a PSCell change or a CPAC is performed simultaneously. When executing the CHO recovery process, the terminal again executes the process of the PSCell addition or the PSCell change or the CPAC corresponding to the newly selected target PCell. If the two times of processes of the PSCell addition or the PSCell change or the CPAC are failed, the terminal needs to record two sets of SCG failure related information for the SCG side, and the recording method and contents may be the same as those when the SCG failure related information is recorded for the first time.

As can be seen from the above description, in the embodiments of the present disclosure, the termina reports the failure-related information, so that the network device can perform optimization to configure a more appropriate CHO configuration to ensure that both the PCell and the PSCell are synchronously reconfigured successfully when the CHO is executed, or the network device can perform optimization to configure a more appropriate CHO and/or CPAC configuration to ensure the successful execution of the CHO and/or the CPAC and avoid the failure.

The technical solutions according to the embodiments of the present disclosure may be applicable to various systems, especially the 5G system. For example, an applicable system may be a Global System of Mobile Communication (GSM) system, a Code Division Multiple Access (CDMA) system, a Wideband Code Division Multiple Access (WCDMA) General Packet Radio Service (GPRS) system, a Long-Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (WiMAX) system, a 5G New Radio (NR) system, etc. Each of these systems includes a terminal device and a network device, and may further include a core network part, such as an Evolved Packet System (EPS), a 5G System (5GS), etc.

The terminal device involved in the embodiments of the present disclosure may refer to a device that provides voice and/or data connectivity to users, a handheld device with a radio connection function, or any other processing device connected to a radio modem. The name of the terminal device may be varied in different systems. For example, in the 5G system, the terminal device may be called as User Equipment (UE). A wireless terminal device may be communicated with one or more Core Networks (CNs) via a Radio Access Network (RAN). The wireless terminal device may be a mobile terminal device, such as a mobile phone (or called as a "cellular" phone) and a computer with a mobile terminal device such as a portable, pocket-sized, hand-held, computer-built or vehicle-mounted mobile device, which exchange languages and/or data with the radio access network. For example, the wireless terminal device may be a Personal Communication Service (PCS) phone, a cordless phone, a Session Initiated Protocol (SIP) phone, a Wireless Local Loop (WLL) station, a Personal Digital Assistant (PDA), etc. The wireless terminal device may also be called as a system, a subscriber unit, a subscriber station, a mobile station, a mobile, a remote station, an access point, a remote terminal, an access terminal, a user terminal, a user agent and a user device, which are not limited in the embodiments of the present disclosure.

The terminal device involved in the embodiments of the present disclosure may be a base station that may include a plurality of cells serving the terminal. Depending on the specific application scenarios, the base station may also be called as an access point, or may be a device in an access network communicated with the wireless terminal device through one or more sectors over an air interface, or may have other names. The network device may be used to exchange the received air frames with Internet Protocol (IP) packets, and act as a router between the wireless terminal device and the rest of the access network, where the rest of the access network may include an IP communication network. The network device may also coordinate the attribute management of the air interface. For example, the network device involved in the embodiments of the present disclosure may be a network device (Base Transceiver Station, BTS) in a Global System for Mobile communications (GSM) or a Code Division Multiple Access (CDMA), or a network device (NodeB) in a Wide-band Code Division Multiple Access (WCDMA), or an evolutional network device (evolutional Node B, eNB or e-NodeB) in a Long Term Evolution (LTE) system, or a 5G base station (gNB) in a 5G network architecture (next generation system), or a Home evolved Node B (HeNB), a relay node, a femto, a pico, etc., which are not limited in the embodiments of the present disclosure. In some network structures, the network device may include a Centralized Unit (CU) node and a Distributed Unit (DU) node, which may also be geographically separated.

The network device and the terminal device may each use one or more antennas to perform Multi Input Multi Output (MIMO) transmission. The MIMO transmission may be a Single User MIMO (SU-MIMO) or a Multiple User MIMO (MU-MIMO). Depending on the form and the number of the antenna combinations, the MIMO transmission may be a 2Dimission MIMO (2D-MIMO), a 3Dimission MIMO (3D-MIMO), a Full Dimension MIMO (FD-MIMO) or a super-large-scale MIMO (massive-MIMO), or may be a diversity transmission or a precoding transmission or a beamforming transmission, etc.

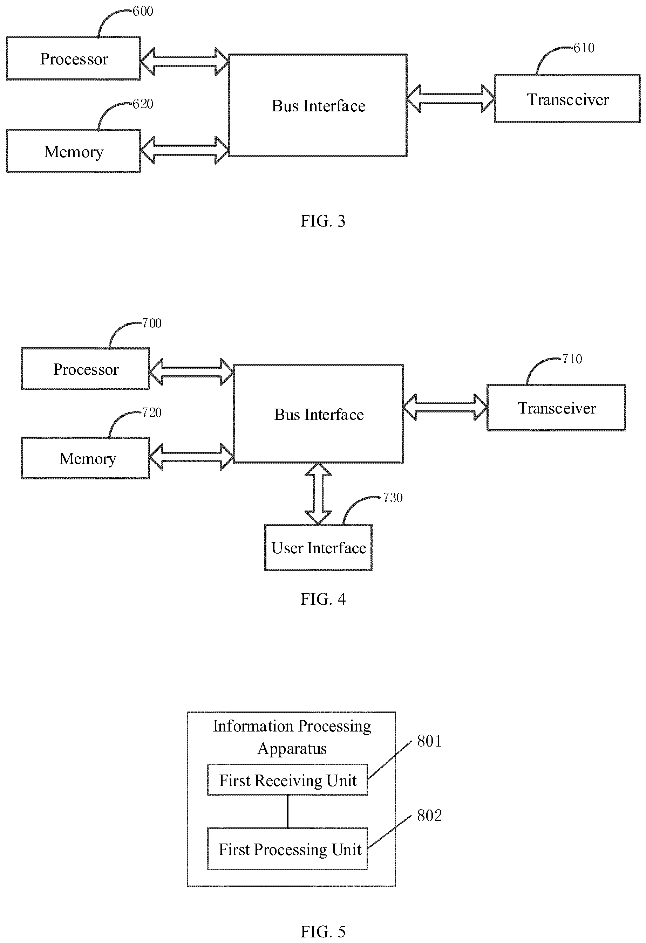

As shown in FIG. 3, an information processing apparatus according to an embodiment of the present disclosure is applied to a network device, and includes a processor 600 configured to read a program in a memory 620 and perform the following processes:
sending CHO configuration information to a terminal, where the CHO configuration information includes SCG configuration information;
receiving first information reported by the terminal, where the first information is recorded by the terminal in case of failure, and the first information includes information related to the CHO configuration information;
a transceiver 610 configured to receive and transmit data under the control of the processor 600.

In which, in FIG. 3, a bus architecture may include any number of interconnected buses and bridges. Specifically, one or more processors represented by the processor 600 and various circuits of the memory represented by the memory 620 are linked together. The bus architecture may also link various other circuits, such as a peripheral device, a voltage regulator and a power management circuit, which are well known in the art and will not be further described herein. The bus interface provides an interface. The transceiver 610 may be composed of a plurality of elements, i.e., includes a transmitter and a receiver, and provides units for communications with various other devices on a transmission medium. The processor 600 is responsible for managing the bus architecture and general processing, and the memory 620 may store data used by the processor 600 during operation.

The processor 600 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor 600 is responsible for managing the bus architecture and general processing, and the memory 620 may store data used by the processor 600 during operation.

In which, the contents and meanings of the SCG configuration information and the first information may refer to the description in the aforementioned method embodiments.

The processor 600 is further configured to read the program and perform the following steps:
sending the first information to a source MN and/or a target MN, so that the source MN sends the first information to the target MN through a first interface message; or the target MN sends the first information to the source MN through a second interface message; or the target MN sends the first information to the target Secondary Node (SN) through a third interface message, and the target SN sends the first information to the MN through a fourth interface message.

Optionally, the first interface message or the second interface message or the third interface message or the fourth interface message is implemented by one or more of:
a traditional XN interface message, a traditional NG interface message, or a newly introduced XN interface message.

The processor 600 is further configured to read the program and perform the following steps:
receiving a fifth indication sent by the terminal, where the fifth indication indicates that the terminal has recorded the first information;
sending a first request to the terminal; and
receiving the first information reported by the terminal in response to the first request.

It should be noted here that the above apparatus according to the embodiment of the present disclosure can realize all the methodical steps realized by the network device in the aforementioned method embodiments, and achieve the same technical effect, so the parts and the advantageous effects in this embodiment the same as those in the method embodiments will not be described in detail here.

As shown in FIG. 4, an information processing apparatus according to the embodiment of the present disclosure is applied to a terminal, and includes a processor 700 configured to read a program in a memory 720 and perform the following processes:
receiving CHO configuration information sent by a network device, where the CHO configuration information includes SCG configuration information;
if a failure occurs, recording and reporting first information to the network device, where the first information includes information related to the CHO configuration information;
a transceiver 710 configured to receive and transmit data under the control of the processor 700.

In which, in FIG. 4, the bus architecture may include any number of interconnected buses and bridges. Specifically, one or more processors represented by the processor 700 and various circuits of the memory represented by the memory 720 are linked together. The bus architecture may also link various other circuits, such as a peripheral device, a voltage regulator and a power management circuit, which are well known in the art and will not be further described herein. The bus interface provides an interface. The transceiver 710 may be composed of a plurality of elements, i.e., includes a transmitter and a receiver, and provides units for communications with various other devices on a transmission medium. For different user devices, the user interface 730 may also be an interface capable of externally or internally connecting a required device, including but not limited to a keypad, a display, a speaker, a microphone, a joystick or the like.

The processor 700 is responsible for managing the bus architecture and general processing, and the memory 720 may store data used by the processor 700 during operation.

The processor 700 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor is configured to perform any of the methods according to the embodiments of the present disclosure based on the acquired executable instruction by calling a computer program stored in the memory. The processor and the memory may also be physically separated.

In which, the contents and meanings of the SCG configuration information and the first information may refer to the description in the aforementioned method embodiments.

Optionally, if the terminal has many failures, the first information is the first information of one or more of the failures in many failures.

The processor 700 is further configured to read the program and perform the following steps:
reporting the first information to the network device by way of one or more of:
an SCG failure information message; or
a target report.

In which, the meaning of the target report may refer to the description in the aforementioned method embodiments.

If the first information is reported to the network device through two or more target reports or SCG failure information messages, the processor 700 is further configured to read the program and perform the following step:
setting association information in the two or more target reports or SCG failure information messages;
where the association information indicates an association relationship between the two or more target reports or SCG failure information messages.

The meaning of the association information may refer to the description in the aforementioned method embodiments.

The processor 700 is further configured to read the program and perform the following steps:
send a fifth indication to the network device, where the fifth indication indicates that the terminal has recorded the first information;
receiving a first request sent by the network device; and
reporting the first information to the network device in response to the first request.

It should be noted here that the above apparatus according to the embodiment of the present disclosure can realize all the methodical steps realized by the terminal in the aforementioned method embodiments, and achieve the same technical effect, so the parts and the advantageous effects in this embodiment the same as those in the method embodiments will not be described in detail here.

As shown in FIG. 5, an information processing apparatus according to an embodiment of the present disclosure is applied to a terminal, and includes:
a first receiving unit 801 configured to receive CHO configuration information sent by a network device, where the CHO configuration information includes SCG configuration information; and a first processing unit 802 configured to record and report first information to the network device in case of failure, where the first information includes information related to the CHO configuration information.

In which, the contents and the meanings of the SCG configuration information and the first information may refer to the description in the aforementioned method embodiments.

Optionally, if the terminal has many failures, the first information is the first information of one or more of the failures in many failures.

Optionally, the first processing unit is further configured to report the first information to the network device by way of one or more of:
an SCG failure information message; or
a target report.

In which, the meaning of the target report may refer to the description in the aforementioned method embodiments.

Optionally, the apparatus may further include:
a setting unit configured to, if the first information is reported to the network device through two or more target reports or SCG failure information messages, set association information in the two or more target reports or SCG failure information messages;
where the association information indicates an association relationship between the two or more target reports or SCG failure information messages.

The meaning of the association information may refer to the description in the aforementioned method embodiments.

Optionally, the apparatus may further include:
a first sending unit configured to send a fifth indication to the network device, where the fifth indication indicates that the terminal has recorded the first information; and
a first receiving unit configured to receive a first request sent by the network device.

Optionally, the first processing unit is further configured to report the first information to the network device in response to the first request.

It should be noted here that the above apparatus according to the embodiment of the present disclosure can realize all the methodical steps realized by the terminal in the aforementioned method embodiments, and achieve the same technical effect, so the parts and the advantageous effects in this embodiment the same as those in the method embodiments will not be described in detail here.

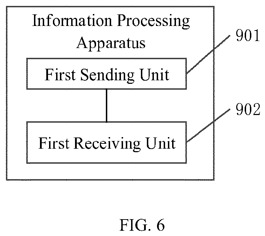

As shown in FIG. 6, an information processing apparatus according to an embodiment of the present disclosure is applied to a network device, and includes:
a first sending unit 901 configured to send CHO configuration information to a terminal, where the CHO configuration information includes SCG configuration information; and a first receiving unit 902 configured to receive the first information reported by the terminal, where the first information is recorded by the terminal in case of failure, and the first information includes information related to the CHO configuration information.

In which, the contents and the meanings of the SCG configuration information and the first information may refer to the description in the aforementioned method embodiments.

Optionally, the apparatus may further include:
a second sending unit configured to send the first information to a source MN and/or a target MN, so that the source MN sends the first information to the target MN through a first interface message; or the target MN sends the first information to the source MN through a second interface message; or the target MN sends the first information to a target Secondary Node (SN) through a third interface message, and the target SN sends the first information to the MN through a fourth interface message.

Optionally, the first interface message or the second interface message or the third interface message or the fourth interface message is implemented by one or more of:
a traditional XN interface message, a traditional NG interface message, or a newly introduced XN interface message.

Optionally, the apparatus may further include:
a second receiving unit configured to receive a fifth indication sent by the terminal, where the fifth indication indicates that the terminal has recorded the first information; and
a third sending unit configured to send the first request to the terminal;
the first receiving unit is further configured to receive the first information reported by the terminal in response to the first request.

It should be noted here that the above apparatus according to the embodiment of the present disclosure can realize all the methodical steps realized by the network device in the aforementioned method embodiments, and achieve the same technical effect, so the parts and the advantageous effects in this embodiment the same as those in the method embodiments will not be described in detail here.

It should be noted that the division of units in the embodiments of the present disclosure is schematic and only a logical function division, and there may be other division modes in actual implementations. In addition, various functional units in the embodiments of the present disclosure may be integrated into one processing unit or existed physically alone, or two or more units may be integrated into one unit. The integrated unit may be implemented in the form of hardware or implemented in the form of a software functional unit.

The integrated unit may be stored in a processor-readable storage medium when being implemented in the form of a software functional unit and sold or used as an independent product. Based on this understanding, the essence (in other words, a part that contributes to the related art) of the technical solution of the present disclosure, or all or part of the technical solution, can be embodied in the form of a computer software product, which is stored in a storage medium and includes a plurality of instructions for enabling a computer device (which may be a personal computer, a server, a network device, etc.) or a processor to perform all or part of the steps of the methods described in the embodiments of the present disclosure. The aforementioned storage medium includes any medium capable of storing program codes, such as a U disk, a mobile hard disk, a Read-Only Memory (ROM), a Random Access Memory (RAM), a magnetic disk or an optical disk.

The embodiments of the present application further provide a processor-readable storage medium, on which a program is stored, where when being executed by a processor, the program implements each process of the embodiments of the above information processing method, and achieves the same technical effect, which will be omitted here order to avoid repetition. In which, the readable storage medium may be any available medium or data storage device that can be accessed by the processor, including but not limited to a magnetic memory (e.g., a floppy disk, a hard disk, a magnetic tape, a magneto-optical (MO) disk, etc.), an optical memory (e.g., a Compact Disk (CD), a Digital Versatile Disc (DVD), a Blu-ray Disc (BD), a High-Definition Versatile Disc (HVD), etc.), and a semiconductor memory (e.g., an ROM, an Erasable Programmable Read-Only Memory (EPROM), an Electrically Erasable Programmable read only memory (EEPROM), a non-volatile memory (NAND FLASH), a Solid State Disk (SSD)), etc.

It should be noted that herein the term "include", "include" or any other variation thereof is intended to cover a non-exclusive inclusion, so that a process, method, article or apparatus including a series of elements includes not only those elements, but also other elements not explicitly listed, or elements inherent to such process, method, article or apparatus. Without further restrictions, an element defined by the statement "including a ..." does not exclude the existence of another identical element in the process, method, article or apparatus including the element.

From the description of the above embodiments, those skilled in the art can clearly understand that the methods of the above embodiments may be implemented by means of software and necessary general hardware platform, and of course may be implemented by means of hardware, but in many cases, the former is a better implementation. Based on this understanding, the essence (in other words, a part that contributes to the related art) of the technical solution of the present disclosure may be embodied in the form of a software product, which is stored in a storage medium (e.g., an ROM or RAM, a magnetic, an optical disk, etc.) and includes a plurality of instructions for enabling a terminal (which may be a mobile phone, a computer, a server, an air conditioner, a network device, etc.) to perform the methods described in various embodiments of the present disclosure.

The embodiments of the present disclosure have been described above with reference to the drawings, but the present disclosure is not limited to the above specific embodiments, which are only schematic rather than restrictive. Under the suggestion of the present disclosure, those of ordinary skill in the art can make many forms without departing from the spirit of the present disclosure and the protection scope of the claims, and they fall within the protection scope of the present disclosure.

## Claims

1. An information processing method, comprising:
receiving, by a terminal, Conditional Handover (CHO) configuration information sent by a network device, wherein the CHO configuration information comprises Secondary Cell Group (SCG) configuration information; and
if a failure occurs, recording and reporting first information by the terminal to the network device, wherein the first information comprises information related to the CHO configuration information.

2. The method according to claim 1, wherein the SCG configuration information comprises one or more of:
a Primary Serving Cell (PSCell) of a candidate secondary cell group and a synchronous reconfiguration command corresponding to the PSCell;
first Conditional PSCell Addition/Change (CPAC) configuration information, wherein the first CPAC configuration information comprises one or more candidate PSCells; trigger conditions and synchronous reconfiguration commands corresponding to the candidate PSCells; or
second CPAC configuration information, wherein the second CPAC configuration information comprises a plurality of candidate PSCells and synchronous reconfiguration commands corresponding to the candidate PSCells.

3. The method according to claim 1, wherein the first information comprises one or more of:
PSCell-related information;
time information;
information related to the first CPAC configuration information and/or the second CPAC configuration information; or
second information;
wherein the first CPAC configuration information comprises: one or more candidate PSCells; trigger conditions and synchronous reconfiguration commands corresponding to the candidate PSCells; and the second CPAC configuration information comprises a plurality of candidate PSCells and synchronous reconfiguration commands corresponding to the candidate PSCells.

4. The method according to claim 3, wherein the PSCell-related information comprises one or more of:
identification information of a target PSCell;
Random Access Channel (RACH) information of the target PSCell;
a measurement result of the target PSCell; or
identification information of a source PSCell.

5. The method according to claim 3, wherein the time information comprises:
a time interval between a first event and a second event; wherein,
the first event comprises one or more of: a reception of the CHO configuration information, a reception of the CPAC configuration information, an execution of a CHO, an execution of a PSCell addition, an execution of a PSCell change, an execution of a CPAC, a failure of the execution of the PSCell addition, a failure of the execution of the PSCell change, a failure of the execution of the CPAC, meeting of a CHO trigger condition, or meeting of a CPAC trigger condition; and
the second event comprises one or more of: a failure of the execution the PSCell addition, a failure of the execution the PSCell change, a failure of the execution the CPAC, an execution of a PSCell addition, an execution of a PSCell change, an execution of a CPAC, reporting of the failure of the execution the PSCell addition or the PSCell change or the CPAC, a Radio Link Failure (RLF) of the terminal in the target PSCell, meeting of the CHO trigger condition, or meeting of the CPAC trigger condition.

6. The method according to claim 5, wherein the time interval between the first event and the second event comprises one or more of:
a time interval from the reception of the CHO configuration information or the CPAC configuration information to the failure of the PSCell addition or the PSCell change or the CPAC;
a time interval from the execution of the CHO or the PSCell addition or the PSCell change or the CPAC to the failure of the PSCell addition or the PSCell change or the CPAC;
a time interval from the reception of the CHO configuration information or the CPAC configuration information to the execution of the PSCell addition or the PSCell change or the CPAC;
a time interval from the failure of the PSCell addition or the PSCell change or the CPAC to the reporting of the failure;
a time interval from the reception of the CHO configuration information or the CPAC configuration information to the RLF of the terminal in the target PSCell;
a time interval from the execution of the CHO or the CPAC to the RLF of the terminal in the target PSCell;
a time interval from a time when the CHO trigger condition is met to a time when the CPAC trigger condition is met; or
a time interval from a time when the CPAC trigger condition is met to a time when the CHO trigger condition is met.

7. The method according to claim 3, wherein the information related to the first CPAC configuration information and/or the second CPAC configuration information comprises one or more of:
identification information of a candidate target PSCell;
latest measurement result information of the candidate target PSCell;
CPAC trigger conditions;
information of the met CPAC trigger conditions; or
a time interval in which the CPAC trigger conditions are met.

8. The method according to claim 3, wherein the second information comprises one or more of:
a first indication that indicates whether the SCG configuration information is configured in the CHO configuration information;
a second indication that indicates a success or a failure of the PSCell addition or the PSCell change or the CPAC if the SCG configuration information is configured in the CHO configuration information;
a third indication that indicates information related to the CHO trigger condition and/or the CPAC trigger condition;
a fourth indication that indicates that an SCG side is a CPAC process; or
PCell identification information corresponding to the target PSCell.

9. The method according to claim 8, wherein the third indication indicates one or more of:
whether the CHO trigger condition and the CPAC trigger condition are met simultaneously;
whether the CHO trigger condition is met;
whether the CPAC trigger condition is met; or
a sequence of the time when the CHO trigger condition is met and the time when the CPAC trigger condition is met.

10. The method according to claim 1, wherein the failure of the terminal comprises one or more of:
a failure of the CHO;
a failure of the PSCell addition or the PSCell change or the CPAC;
an RLF;
a failure of an execution of a traditional handover (HO); or
a failure of a CHO recovery.

11. The method according to claim 10, wherein the RLF comprises one or more of the following situations:
an RLF occurs in a source PCell before a CHO trigger condition is not met;
a PCell handover is successful, and the terminal has an RLF within a first time of connection with a target PCell; or
the PSCell addition or the PSCell change or the CPAC is successful, and the terminal has an RLF within a second time of connection with a target PSCell.

12. The method according to claim 1, wherein the terminal reports the first information to the network device by way of one or more of:
an SCG failure information message; or
a target report.

13. The method according to claim 12, wherein the target report comprises one or more of:
a traditional RLF report;
a newly introduced report;
a Successful Handover Report (SHR); or
a Random-Access Channel (RACH) report.

14. The method according to claim 12, further comprising:
if the first information is reported to the network device through two or more target reports or SCG failure information messages, the terminal sets association information in the two or more target reports or SCG failure information messages;
wherein the association information indicates an association relationship between the two or more target reports or SCG failure information messages.

15. The method according to claim 14, wherein the association information comprises one or more of:
time stamp information;
identification information of the terminal; or
random numbers.

16. The method according to claim 1, wherein if the terminal has many failures, the first information is the first information of one or more of the failures in many failures.

17. The method according to claim 1, further comprising:
sending, by the terminal, a fifth indication to the network device, wherein the fifth indication indicates that the terminal has recorded the first information; and
receiving, by the terminal, a first request sent by the network device;
reporting, by the terminal, the first information to the network device comprises:
reporting, by the terminal, the first information to the network device in response to the first request.

18. An information processing method, comprising:
sending, by a network device, CHO configuration information to a terminal, wherein the CHO configuration information comprises SCG configuration information; and
receiving, by the network device, first information reported by the terminal, wherein the first information is recorded by the terminal in case of failure, and the first information comprises information related to the CHO configuration information.

19. The method according to claim 18, further comprising:
sending, by the network device, the first information to a source Master Node (MN) and/or a target MN, so that the source MN sends the first information to the target MN through a first interface message; or the target MN sends the first information to the source MN through a second interface message; or the target MN sends the first information to a target Secondary Node (SN) through a third interface message, and the target SN sends the first information to the MN through a fourth interface message.

20. The method according to claim 19, wherein,
the first interface message or the second interface message or the third interface message or the fourth interface message is implemented by one or more of:
a traditional XN interface message, a traditional NG interface message, or a newly introduced XN interface message.

21. The method according to claim 18, further comprising:
receiving, by the network device, a fifth indication sent by the terminal, wherein the fifth indication indicates that the terminal has recorded the first information; and
sending, by the network device, a first request to the terminal;
receiving, by the network device, the first information reported by the terminal comprises:
receiving, by the network device, the first information reported by the terminal in response to the first request.

22. An information processing apparatus applied to a terminal, comprising: a memory, a transceiver, and a processor;
the memory is configured to store a computer program; the transceiver is configured to transmit and receive data under the control of the processor; and the processor is configured to read the computer program in the memory and perform the following operations:
receiving Conditional Handover (CHO) configuration information sent by a network device, wherein the CHO configuration information comprises Secondary Cell Group (SCG) configuration information; and
if a failure occurs, recording and reporting first information to the network device, wherein the first information comprises information related to the CHO configuration information.

23. The apparatus according to claim 22, wherein the SCG configuration information comprises one or more of:
a candidate PSCell and a synchronous reconfiguration command corresponding to the PSCell;
first CPAC configuration information, wherein the first CPAC configuration information comprises one or more candidate PSCells and trigger conditions and synchronous reconfiguration commands corresponding to the candidate PSCells; or
second CPAC configuration information, wherein the second CPAC configuration information comprises a plurality of candidate PSCells and synchronous reconfiguration commands corresponding to the candidate PSCells.

24. The apparatus according to claim 22, wherein the first information comprises one or more of:
PSCell-related information;
time information;
information related to the first CPAC configuration information and/or the second CPAC configuration information; or
second information;
wherein the first CPAC configuration information comprises one or more candidate PSCells and trigger conditions and synchronous reconfiguration commands corresponding to the candidate PSCells; and the second CPAC configuration information comprises a plurality of candidate PSCells and synchronous reconfiguration commands corresponding to the candidate PSCells.

25. An information processing apparatus applied to a network device, comprising: a memory, a transceiver, and a processor;
the memory is configured to store a computer program; the transceiver is configured to transmit and receive data under the control of the processor; and the processor is configured to read the computer program in the memory and perform the following operations:
sending CHO configuration information to a terminal, wherein the CHO configuration information comprises SCG configuration information; and
receiving first information reported by the terminal, wherein the first information is recorded by the terminal in case of failure, and the first information comprises information related to the CHO configuration information.

26. The apparatus according to claim 25, wherein the processor is further configured to read the computer program in the memory and perform the following operations:
sending the first information to a source MN and/or a target MN, so that the source MN sends the first information to the target MN through a first interface message; or the target MN sends the first information to the source MN through a second interface message; or the target MN sends the first information to a target Secondary Node (SN) through a third interface message, and the target SN sends the first information to the MN through a fourth interface message.

27. An information processing apparatus applied to a terminal, comprising:
a first receiving unit configured to receive Conditional Handover (CHO) configuration information sent by a network device, wherein the CHO configuration information comprises Secondary Cell Group (SCG) configuration information; and
a first processing unit configured to record and report first information to the network device in case of failure, wherein the first information comprises information related to the CHO configuration information.

28. An information processing apparatus applied to a network device, comprising:
a first sending unit configured to send CHO configuration information to a terminal, wherein the CHO configuration information comprises SCG configuration information; and
a first receiving unit configured to receive first information reported by the terminal, wherein the first information is recorded by the terminal in case of failure, and the first information comprises information related to the CHO configuration information.

29. A processor-readable storage medium which stores a computer program, wherein the computer program enables a processor to perform the method according to any one of claims 1 to 21.
